**Europäisches Patentamt**

**European Patent Office**

**Office européen des brevets**

(19)

(11) Veröffentlichungsnummer: **0 032 981**
**B1**

(12) # EUROPÄISCHE PATENTSCHRIFT

(45) Veröffentlichungstag der Patentschrift:
**11.03.87**

(51) Int. Cl.⁴: **G 08 B 1/08, H 04 B 9/00**

(21) Anmeldenummer: **80106862.8**

(22) Anmeldetag: **07.11.80**

(54) **Hausnotrufsystem mit Fernauslösung.**

(30) Priorität: **12.01.80 DE 3000958**

(43) Veröffentlichungstag der Anmeldung:
**05.08.81 Patentblatt 81/31**

(45) Bekanntmachung des Hinweises auf die Patenterteilung:
**11.03.87 Patentblatt 87/11**

(84) Benannte Vertragsstaaten:
**CH DE FR GB LI NL SE**

(56) Entgegenhaltungen:
**DE - A - 2 712 690**
**DE - A - 2 823 931**
**FR - A - 2 070 903**
**FR - A - 2 368 766**

(73) Patentinhaber: **ANT Nachrichtentechnik GmbH,
Gerberstrasse 33, D-7150 Backnang (DE)**

(72) Erfinder: **Rupp, Dieter, Dipl.-Ing., Bergäckerstrasse 13,
D-7151 Allmersbach im Tal (DE)**

(74) Vertreter: **Schickle, Gerhard, Dipl.-Ing., ANT
Nachrichtentechnik GmbH Patent- und Lizenzabteilung
Gerberstrasse 33, D-7150 Backnang (DE)**

## Beschreibung

Die Erfindung betrifft ein Hausnotrufsystem, bei dem über ein in einem Raum angeordnetes Teilnehmergerät an eine angeschlossene Zentrale ein Notruf abgegeben werden kann.

Hausnotrufsysteme haben die Aufgabe, alleinstehenden und gebrechlichen Personen die Möglichkeit zu geben, in Notfällen Hilfe herbeirufen zu können.

Aus der DE-OS 27 12 690 ist es bekannt, in der Wohnung der hilfsbedürftigen Personen ein Hausnotruf-Teilnehmergerät aufzustellen, das über irgendeinen Übertragungsweg, z.B das öffentliche Fernsprechnetz, Notrufe an eine hilfsbereite Stelle übermitteln kann. Die hilfsbedürftige Person trägt ein Körpergerät, das das Auslösesignal mittels Funk-, Schall- oder Lichtwellen zum Teilnehmergerät überträgt. Wo eine unmittelbare Verbindung über Funk-, Schall- oder Lichtwellen nicht möglich ist, sind Relaisstellen vorgesehen, die über Drahtleitungen mit dem Teilnehmergerät verbunden sind.

Diese Anordnung hat den Nachteil, dass eine Übertragung über Funk durch andere Dienste gestört werden kann und nicht genügend geeignete Kanäle zur Verfügung stehen. Nachteilig ist ausserdem, dass zwischen den Relaisstellen und dem Teilnehmergerät ein Leitungsnetz installiert werden muss.

Aufgabe der Erfindung ist es, ein Hausnotrufsystem der obigen Art anzugeben, welches die Auslösung des Notrufs durch das Körpergerät in freizügiger Weise auch aus anderen als den mit einem Teilnehmergerät ausgestatteten Räumen ohne Belegung von Funkkanälen, ohne Störmöglichkeit durch fremde Funkdienste, ohne aufwendige Installationen und ohne die Notwendigkeit von Wanddurchbrüchen erlaubt.

Erreicht wird dies durch die im Patentanspruch 1 genannten Merkmale. Der Unteranspruch gibt eine zweckmässige Weiterbildung der Erfindung an.

Aus der deutschen Offenlegungsschrift 28 23 931 ist eine Fernsprech-Teilnehmerstation bekannt, welche aus einem schnurlosen Handapparat, einem Grundapparat und einer zwischen diesen angeordneten Relaisstation besteht. Alle diese drei Teile befinden sich in dem selben Raum. Zwischen dem Handapparat und der Relaisstation sowie der Relaisstation und dem Grundapparat geschieht die Signalübertragung mit Infrarotwellen, wobei zwischen dem Handapparat und der Relaisstation eine andere Wellenlänge angewendet wird als zwischen der Relaisstation und dem Grundapparat. Zur Lösung der der Erfindung zu Grunde liegenden Aufgabe ist diese Fernsprech-Teilnehmerstation nicht geeignet, da eine Signalübertragung aus benachbarten Räumen nicht vorgesehen ist.

Aus der französischen Offenlegungsschrift 23 68 766 ist ein Alarmsystem mit der Auslösung des Alarms aus benachbarten Räumen mittels elektromagnetischer Wellen bekannt. Zur Lösung der der Erfindung zu Grunde liegenden Aufgabe ist dieses System nicht geeignet, da Wanddurchbrüche vorgesehen sind. In die Wanddurchbrüche sind rein passive Wellenleiter eingesetzt, d.h. eine Verstärkung der Wellen findet nicht statt. Dadurch ist die Reichweite begrenzt.

Demgegenüber ist bei dem erfindungsgemässen System in den Relaisstellen eine Verstärkung vorgesehen, wodurch die Reichweite und die Zahl der Räume unbegrenzt ist.

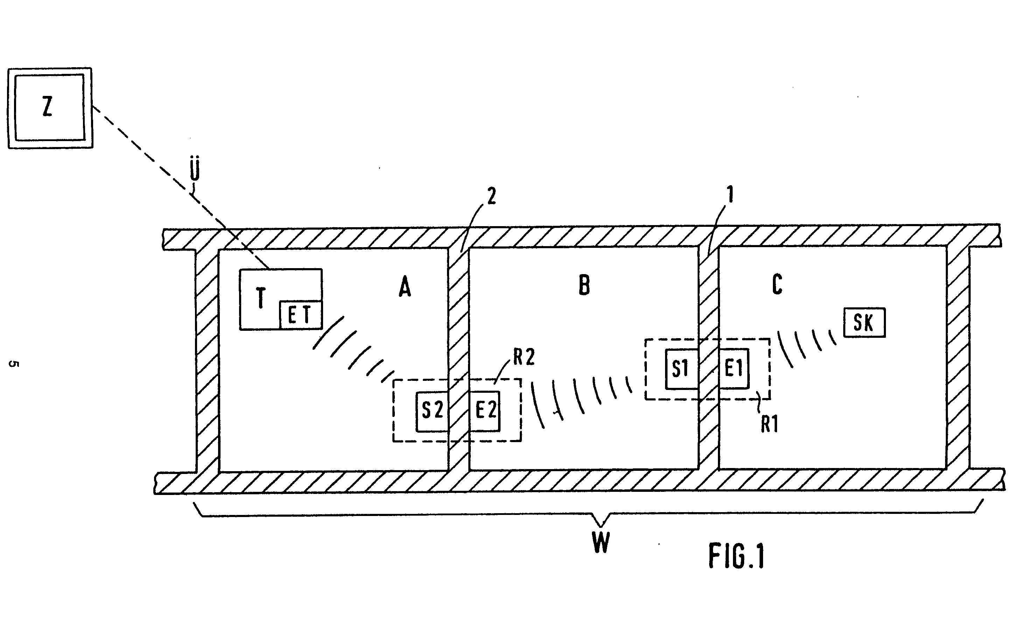

Die Erfindung wird anhand der Figur 1 beschrieben. Die Notrufzentrale Z ist über den Übertragungsweg Ü mit dem Teilnehmergerät T verbunden, das sich im Raum A der Wohnung W der hilfebedürftigen Person befindet. Zu der Wohnung gehören noch die Räume B und C. Die hilfebedürftige Person mit ihrem Körpergerät befindet sich gerade im Raum C und löst z.B. durch Betätigung einer Taste des Körpergerätes den Notruf aus. Der Ultraschall- oder Infrarot-Sender SK des Körpergerätes sendet das Auslösesignal aus, das vom Empfänger E1 der Relaisstelle R1 empfangen wird. Da der Ausgang des Empfängers E1 mit dem Eingang des Senders S1 gekoppelt ist, sendet der Sender S1 nach Verstärkung im Empfänger und/oder im Sender auch ein Signal aus, das in gleicher Weise vom Empfänger E2 der Relaisstelle R2 empfangen und vom Sender S2 wieder ausgesendet wird. Das vom Sender S2 ausgesandte Signal wird vom Empfänger ET des Teilnehmergerätes T empfangen und bewirkt die Aussendung des Notrufsignales über den Übertragungsweg Ü zur Zentrale Z.

Um einen Wanddurchbruch zwischen dem Empfänger E1 und dem Sender S1 zu vermeiden, ist die Kopplung induktiv ausgeführt, d.h., am Ausgang des Empfängers E1 ist eine Koppelspule angeschlossen, deren magnetisches Feld in der mit dem Eingang des Senders S1 verbundenen Koppelspule eine Spannung induziert. Beide Koppelspulen können mit Ferrit-Kernen versehen sein.

Dadurch, dass die Übertragung des Auslösesignals zwischen dem Sender SK des Körpergerätes und der Relaisstelle R1, zwischen der Relaisstelle R1 und der Relaisstelle R2 sowie zwischen der Relaisstelle R2 und dem Empfänger ET des Teilnehmergerätes in der gleichen Weise stattfindet, kann die hilfebedürftige Person völlig freizügig mit ihrem Körpergerät aus jedem der Räume A, B oder C den Notruf auslösen. Bei einer Auslösung aus dem Raum B wird das vom Körpergerät ausgesandte Auslösesignal unmittelbar von der Relaisstelle R2 empfangen und wie oben beschrieben an den Empfänger ET des Teilnehmergerätes übertragen. Bei einer Auslösung aus dem Raum A wird das Auslösesignal unmittelbar vom Empfänger ET des Teilnehmergerätes empfangen.

## Patentansprüche

1. Hausnotrufsystem, bei dem über ein in einem Raum (A) angeordnetes Teilnehmergerät (T) an eine angeschlossene Zentrale (Z) ein Notruf angegeben werden kann, dessen Auslösung drahtlos durch ein Schall- oder Licht-Wellen aussendendes Körpergerät erfolgt, wobei zur Auslösung des Notrufes von einem anderen, durch mindestens eine Zwischenwand (1 oder 2) getrennten Raum (B oder C) das erforderliche Auslösesignal mittels mindestens einer Relaisstelle (R1 oder R2) zum Teilnehmergerät (T) übertragen wird, dadurch gekennzeichnet, dass die Relaisstellen (R2 oder R1) aus einem an der jeweiligen Zwischenwand (2 oder 1) angebrachten Sender (S2 oder S1) und je einem durch die jeweilige Zwischenwand (2 oder 1) induktiv mit ihm gekoppelten und ihm gegenüber angebrachten Empfänger (E2 oder E1) bestehen, wobei die Sender (S2 oder S1) auf der dem Teilnehmergerät (T) oder einer in Richtung zum Teilnehmergerät (T) gelegenen weiteren Relaisstelle (R2) zugekehrten Seite der Zwischenwand (2 oder 1) angeordnet sind, dass die Übertragung des Auslösesignals in jedem der Räume (A, B, C) in der gleichen Weise geschieht, dass das Auslösesignal in den Relaisstellen verstärkt wird, und dass als Wellenart Ultraschall- oder Infrarotwellen verwendet werden.

2. Hausnotrufsystem nach Anspruch 1, dadurch gekennzeichnet, dass die induktive Kopplung durch Koppelspulen mit Ferritkernen erfolgt.

## Claims

1. In-house emergency call system wherein an emergency call can be made from a subscriber device (T) disposed in a room (A) to a connected central exchange (Z), said emergency call being actuated without wires by a device attached to the body and emitting sound or light waves, with the actuation signal required to actuate the emergency call being transmitted to the subscriber device (T) from another room (B or C) separated by at least one partition wall (1 or 2) by means of at least one relay station (R1 or R2), characterized in that the relay stations (R2 or R1) are composed of a transmitter (S2 or S1) attached to the respective partition wall (2 or 1) and a receiver (E2 or E1) which is inductively coupled with the transmitter through the respective partition wall (2 or 1) and is disposed opposite said transmitter, with the transmitters (S2 or S1) being disposed on the side of the partition wall (2 or 1) facing the subscriber device (T) or facing a further relay station (R2) disposed in the direction toward the subscriber device (T); the actuating signal is transmitted in the same manner in each one of the rooms (A, B, C); the actuation signal is amplified in the relay stations; and ultrasound or infrared waves are used as the type of wave.

2. In-house emergency call system according to claim 1, characterized in that the inductive coupling is effected by means of coupling coils having ferrite cores.

## Revendications

1. Système d'appel au secours domestique dans lequel on peut envoyer par l'intermédiaire d'un poste d'abonné (T) disposé dans une pièce (A), à une centrale raccordée (Z), un appel au secours dont le déclenchement se fait sans fil au moyen d'un appareil porté sur la personne et émettant des ondes acoustiques ou lumineuses, étant précisé que pour déclencher l'appel au secours à partir d'une autre pièce (B ou C) séparée par au moins une cloison (1 ou 2), le signal de déclenchement nécessaire est transmis au poste d'abonné (T) au moyen d'au moins un poste de relais (R1 ou R2), caractérisé en ce que les postes de relais (R2 ou R1) sont constitués d'un émetteur (S2 ou S1) rapporté sur la cloison respective (2 ou 1) et, chacun, d'un récepteur (E2 ou E1) couplé avec lui par induction à travers la cloison respective (2 ou 1) et rapporté en face de lui, étant précisé que les émetteurs (S2 ou S1) sont disposés du côté de la cloison (2 ou 1) tourné vers le poste d'abonné (T) ou vers un autre poste de relais (R2) placé en direction du poste d'abonné (T); en ce que la transmission du signal de déclenchement se fait de la même façon dans chacune des pièces (A, B, C); en ce que le signal de déclenchement est amplifié dans les postes de relais; et en ce que comme type d'onde, on emploie des ultrasons ou des ondes infrarouges.

2. Système d'appel au secours domestique selon la revendication 1, caractérisé en ce que le couplage inductif se fait au moyen de bobines de couplage à noyaux de ferrite.

FIG.1

0 032 981